# EUROPEAN PATENT APPLICATION

(11) **EP 4 033 786 A1**
(43) Date of publication of application: **27.07.2022**
(21) Application number: 20865147.1
(22) Date of filing: 15.09.2020
(51) Int. Cl.: H04W 4/02

(54) **INTERFERENCE POSITIONING METHOD, APPARATUS AND SYSTEM FOR WIRELESS COMMUNICATION SYSTEM**

(30) Priority: 20.09.2019 CN 201910894379
(71) Applicant: ZTE Corporation, Shenzhen, Guangdong 518057 (CN)
(72) Inventor: ZHAO, Libo, Shenzhen, Guangdong 518057 (CN); JI, Shuping, Shenzhen, Guangdong 518057 (CN); LI, Mengping, Shenzhen, Guangdong 518057 (CN)
(74) Representative: WBH Wachenhausen Patentanwälte PartG mbB
(86) International application number: PCT/CN2020/115395
(87) International publication number: WO 2021/052336

(57) **Abstract**

Provided are an interference positioning method, apparatus and system for a wireless communication system. The interference positioning method for a wireless communication system may include: acquiring interference data of a plurality of system-side nodes, and identifying, according to the interference data, respective types of interference to the plurality of system-side nodes (110); and for interferences identified of a same type, performing clustering according to positions of system-side nodes subjected to the interferences of the type among the plurality of system-side nodes, and determining, based on a result of the clustering, a position of an interference source that generates the interferences of the type (120).

## Description

### CROSS-REFERENCE TO RELATED APPLICATION

The present application is filed based on the Chinese Patent Application 201910894379.8 filed on September 20, 2019, and claims priority of the Chinese Patent Application, the entire contents of which are incorporated herein by reference.

### TECHNICAL FIELD

The present disclosure relates to a wireless communication system, and in particular to an interference positioning method, apparatus and system for a wireless communication system.

### BACKGROUND

In the wireless communication system, interference is a key factor influencing the network quality, and has a significant impact on call quality, call drop, handover, congestion, and network coverage and capacity, or the like. How to reduce or eliminate interference is an important link of fully exerting the performance of the wireless communication network, and is also one of important tasks of network planning and optimization. For a certain communication system, interference is generally classified into intra-system interference and extra-system interference.

Generally, interference detection methods are usually to acquire interference data on site by a frequency spectrometer and identify time frequency waveforms of different interference types, or to acquire physical layer data by a dedicated testing terminal, demodulate the physical layer data and identify the IDs of interfering cells, and then check an engineering parameter table for detection. These methods are time-consuming and labor-consuming, and require specialized persons. In addition, once the interference occurs, cells in a large area will be affected. If the methods are applied to the cells and interference regions one by one, the efficiency is low.

### SUMMARY

The summary of the subject detailed herein will be given below. The summary is not intended to limit the protection scope of the claims.

According to an embodiment of the present disclosure, provided is an interference positioning method for a wireless communication system. The method may include:
acquiring interference data of a plurality of system-side nodes, and identifying, according to the interference data, respective types of interference to the plurality of system-side nodes; and
for identified interferences of a same type, performing clustering according to positions of system-side nodes subjected to the interferences of the type among the plurality of system-side nodes, and determining, based on a result of the clustering, a position of an interference source that generates the type of interference.

According to an embodiment of the present disclosure, further provided is an interference positioning system for a wireless communication system. The system may include a type identification module and an interference positioning module.

The type identification module is configured to acquire interference data of a plurality of system-side nodes, and identify, according to the interference data, respective types of interferences to the plurality of system-side nodes.

The interference positioning module is configured to: for identified interferences of a same type, perform clustering according to positions of system-side nodes subjected to the interferences of the type among the plurality of system-side nodes, and determine, based on a result of the clustering, s position of an interference source that generates the type of interference.

According to an embodiment of the present disclosure, further provided is an interference positioning apparatus for a wireless communication system. The apparatus may include a memory, a processor and computer programs stored on the memory and executable by the processor which, when executed by the processor, cause the processor to carry out the interference positioning method according to the embodiments of the present disclosure.

According to an embodiment of the present disclosure, further provided is a computer-readable storage medium having computer programs stored thereon which, when executed by a processor, cause the processor to carry out the interference positioning method according to the embodiments of the present disclosure.

Other aspects can be understood upon reading and understanding the accompanying drawings and the detailed description.

### BRIEF DESCRIPTION OF DRAWINGS

FIG. 1 is a flowchart of an interference positioning method according to an exemplary embodiment of the present disclosure;
FIG. 2 is a flowchart of training an interference model according to an exemplary embodiment of the present disclosure;
FIG. 3 is a flowchart of performing positioning analysis on an interference source according to an exemplary embodiment of the present disclosure;
FIG. 4 is a module diagram of an interference positioning system according to an exemplary embodiment of the present disclosure; and
FIG. 5 is a schematic structural diagram of an interference positioning apparatus according to an exemplary embodiment of the present disclosure.

### DETAILED DESCRIPTION

In the present disclosure a plurality of embodiments is described, which are exemplary and non-limiting. In addition, it is obvious to a person having ordinary skills in the art that there may be more embodiments and implementations within the scope of the embodiments described in the present disclosure. Although many possible feature combinations are shown in the accompanying drawings and discussed in the specific implementations, many other combinations of the disclosed features are also possible. Unless otherwise specifically limited, any feature or element in any embodiment may be combined with any other features or elements in any other embodiments, or may take the place of any other features or elements in any other embodiments.

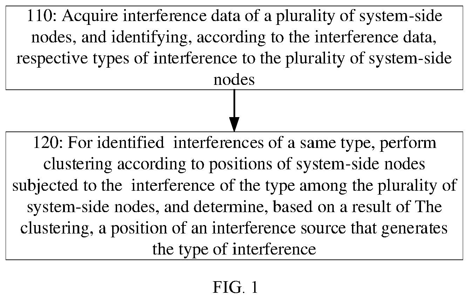

According to an embodiment of the present disclosure, provided is an interference positioning method for a wireless communication system. As shown in FIG. 1, the method may include steps S110 to S120.

At S110, interference data of a plurality of system-side nodes is acquired, and the type of interference to the plurality of system-side nodes is identified according to the interference data.

At S120, for identified interferences of the same type, clustering is performed according to positions of system-side nodes subjected to the interferences of the type among the plurality of system-side nodes, and a position of an interference source that generates the type of interference is determined based on a result of the clustering.

In an exemplary embodiment of the present disclosure, the system-side nodes include access network nodes of the wireless communication system, and the interference data includes uplink Noise Interference (NI) data detected by the access network nodes.

In an exemplary embodiment of the present disclosure, the system-side nodes include cells in the wireless communication system.

In an example, the frequency band of uplink communication is divided into 100 resource blocks (RBs) according to a protocol, with a total bandwidth of 20M. NI is the mean value of 100 RBs in a set period of time, and each RB has a mean value, so that a total of 100 NIs can be obtained. In addition to the NI data, the engineering parameter information is also acquired, including the positions of the system-side nodes (also referred to as stations), such as Geographic Information System or Geo-Information System (GIS) coordinates.

After the uplink interference data is acquired, the interference type can be determined by identifying an uplink interference pattern. The development of artificial intelligence makes it possible to identify interference by machine learning.

In an exemplary embodiment of the present disclosure, the identifying, according to the interference data, respective types of interference to the plurality of system-side nodes includes: inputting the interference data of the plurality of system-side nodes into a trained interference model, and determining, according to an output of the interference model, the respective types of interference to the plurality of system-side nodes, the interference model being used for identifying and outputting the type of interference according to the input interference data.

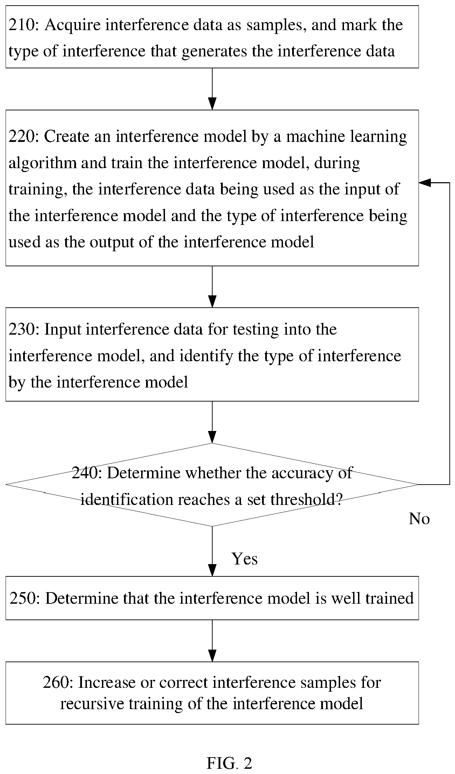

In an exemplary embodiment of the present disclosure, as shown in FIG. 2, the interference model is trained in the following way, which may include steps S210 to S260.

At S210, interference data is acquired as samples, and the type of interference that generates the interference data is marked.

The interference data as samples are acquired interference samples, and these interference samples are artificially identified by specialists to mark corresponding interference types so as to establish an interference sample library.

At S220, an interference model is created by a machine learning algorithm and then trained. During training, the interference data serves as the input of the interference model, and the type of interference serves as the output of the interference model.

The machine learning algorithm is an artificial intelligent algorithm. For example, the machine learning algorithm can adopt a deep neural network, but not limited thereto. The interference model trained by the machine learning algorithm can establish a correlation between the input interference data and the type of interference.

At S230, interference data for testing is input into the interference model, and the type of interference is identified by the interference model.

One system-side node may subject to various types of interference. In an example, it is only necessary to identify the primary interference with the highest energy according to the interference data acquired at one station, and the secondary interference can be ignored.

At S240, a determination is made on whether the accuracy of identification reaches a set threshold; if the accuracy of identification reaches the set threshold, S250 will be executed; and, if the accuracy of identification does not reach the set threshold, a determination is made that the interference model is not well trained, and the process returns to S220 for continuously training the interference model.

At S250, a determination is made that the interference model is well trained.

The trained interference model can be utilized to identify the type of the current network interference. During interference positioning, the interference data of a plurality of system-side nodes acquired on site can be input into the interference model for identification. The output of the interference model is the identified type of interference. The type of interference to each of the plurality of system-side nodes can be shown in the map.

For the trained interference model, the processing may proceed to the following steps.

At S260, interference samples are increased or corrected for recursive training of the interference model.

For the interference data that cannot be identified by the machine during training, the types of interference marked by specialists can be added into the interference sample library as additional samples for subsequent recursive training. Through continuous recursive training, the accuracy of identification of the interference model can be continuously improved.

For the interference identified of the same type, when the clustering is performed according to the positions of system-side nodes to the interferences of the type among the plurality of system-side nodes (in the present disclosure, the "position" means the geographic position, unless otherwise defined), all system-side nodes subjected to the type of interference are used as data points to be clustered on the GIS. By a clustering algorithm, one or more class centers can be determined, and each data point to be clustered is clustered to one class center. The specific clustering algorithm will not be limited in the present disclosure. After the geographic positions of the system-side nodes subjected to the same type of interference are clustered, the system-side nodes clustered to the same class center are system-side nodes that are relatively concentrated geographically and subjected to the same type of interference.

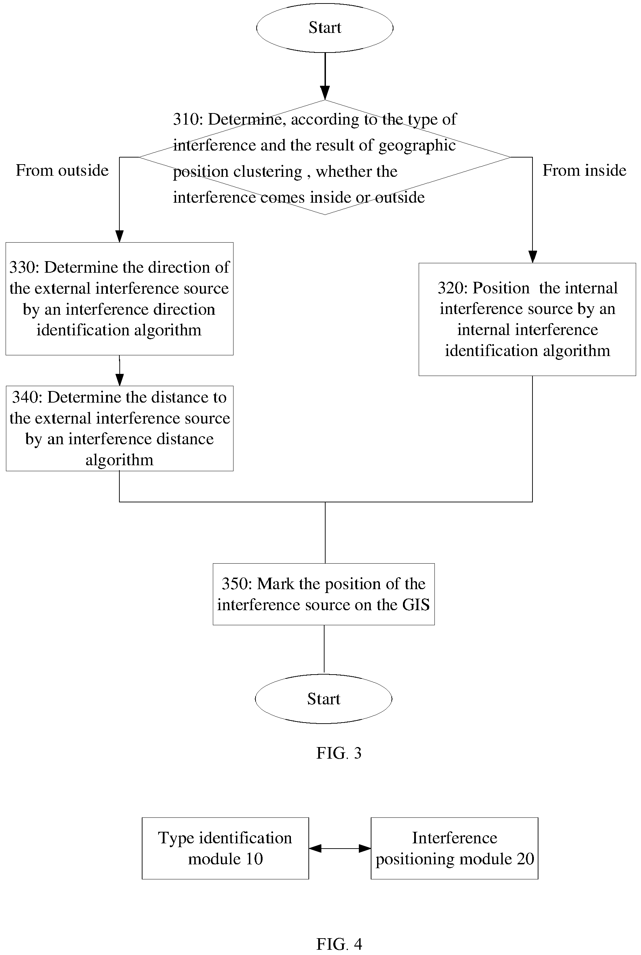

In the embodiment of the present disclosure, whether the interference source comes from inside or outside is determined through the interference type, and the interference source is positioned and analyzed by different positioning algorithms for the internal interference source and the external interference source. As shown in FIG. 3, the processing after the clustering may include steps S310 to S350.

At S310, a determination is made on whether the interference comes from inside or outside; S320 will be executed if the interference comes from inside; and, S330 will be executed if the interference source comes from outside.

The interference coming from inside means that the interference source is an internal interference source and the interference is intra-system interference. The interference coming from outside means that the interference source is an external interference source and the interference is extra-system interference.

It can be determined according to the type of interference whether the interference comes from inside or outside. The intra-system interference includes Global Positioning System (GPS) out-of-step, frame header offset configuration error, atmospheric duct, etc. The extra-system interference includes extra-system narrowband interference, GSM900 (Global System for Mobile Communications at 900MHz) secondary harmonic or second-order intermodulation interference, DCS 1800 (Digital Cellular System at 1800MHz) antenna intermodulation interference, stray and blocking interference of systems with an approximate blocking interference frequency outside the system, interference caused by extra-system jammers (e.g., jammers arranged in public security systems, prisons, broadcasting, etc.). During determination, the result of clustering may also be considered to improve the accuracy. For example, the internal interference often has no fixed center and is relatively scattered, while the external interference generally has clear orientation features.

At S320, the internal interference source is positioned by an internal interference identification algorithm, and the process proceeds to S350.

At S330, the direction of the external interference source is determined by an interference direction identification algorithm.

At S340, the distance to the external interference source is determined by an interference distance algorithm.

At S350, the position of the interference source is marked on the GIS, and the process ends.

In an exemplary embodiment of the present disclosure, the determining, based on the result of clustering, the position of an interference source that generates the type of interference includes: when a determination is made that the type of interference is generated by an internal interference source, performing the following processing on a group of system-side nodes clustered to the same class center. The processing may include steps S I to III.

At step I, N nodes in this group of system-side nodes are arbitrarily combined, where N≥3.

In an example, the group size is set as 3. That is, three class centers are assumed. It is also possible to set 4 or more class centers. By setting 3 class centers, excessive combinations can be avoided.

At step II, for each combination, an interference similarity in case of using a system-side node in this combination as an internal interference source is calculated.

At step III, the position of an internal interference source that generates the type of interference is determined according to positions of N nodes in the combination with the highest interference similarity.

In an exemplary embodiment of the present disclosure, the calculating an interference similarity in case of using a system-side node in this combination as an internal interference source may include steps A to C.

At step A, physical positions and feature spatial positions of this group of system-side nodes are acquired, where the feature spatial position of a system-side node is represented by the position of a feature vector in a time frequency space, and the feature vector includes uplink interference suffered by this system-side node.

The uplink interference data acquired by a cell may be represented by an NI vector in time domain (e.g., 20 hours) and frequency domain (e.g., 100 RB) spaces. The feature spatial position of a cell may be represented by an NI vector of this cell.

At step B, a first area geographically enclosed by this group of system-side nodes and a second area enclosed by feature vectors of this group of system-side nodes in a feature map are calculated.

At step C, an interference similarity in case of using a system-side node in this combination as an internal interference source is determined according to the sum of the first area and the second area. The smaller the sum is, the higher the interference similarity is.

The above processing is the processing of the internal interference identification algorithm, and adopts a matching method combining physical similarity and logic similarity.

In an example, the internal interference identification algorithm may also be represented by following steps:
arbitrarily combining cells subjected to the same type of interference, where the number of cells in each combination is 3;
for any combination, recording the serial number as k and the cells in the combination as C1, C2 and C3;
calculating Sp = S (C1, C2, C3), where Sp is an area enclosed by physical positions of the cells, and the Sp can be calculated according to the GIS coordinates of the three cells C1, C2 and C3 or may be calculated by a dot product operation instead;
calculating Sf = S (C1, C2, C3), where Sf is a curved area enclosed by the feature vectors of the cells in the feature map, and Sf can be calculated according to the NI vector of each cell or may be calculated by a dot production operation instead; and
solving argmin ( | Sp (k) + Sf (k) | ), i.e., obtaining k that minimizes ( | Sp (k) + Sf (k) | ), i.e., determining a combination that minimizes the sum of the two areas.

In the example, if the sum of the two areas for one combination is minimal, it indicates that the interference similarity is the highest in case of using a system-side node in this combination as an internal interference source. The interference similarity can be measured by the reciprocal of the sum of the two areas.

After the combination with the highest interference similarity is obtained, the positions of three stations in this combination can be used as the position of the interference source. The determination of the position of the interference source can help maintenance personnel to quickly find the interference source. Generally, the same type of interference has one interference source, which is usually the station with the highest interference intensity. The interference intensity may be represented by the value of NI.

In an exemplary embodiment of the present disclosure, the determining, based on the result of clustering, the position of an interference source that generates the type of interference includes: when the type of interference is generated by an external interference source, performing the following processing on a group of system-side nodes clustered to a same class center. The process may include steps I to III.

At step I, a first energy distribution feature of interference to this group of system-side nodes is determined according to the acquired interference data of this group of system-side nodes.

In an example, the first energy distribution feature is represented by a sequence of interference energies of the interference to this group of system-side nodes, and the interference energies in the sequence is arranged in an order from the highest to the lowest or from the lowest to the highest. For example, the sequence may be denoted by n= [n1, n2, n3, n4...]. The interference energy may be represented by the energy of the uplink NI in the set period of time.

At step II, a plurality of directions are set for the external interference source, and for each direction, a second energy distribution feature of interference suffered by this group of system-side nodes when the external interference source is located in this direction is calculated.

In an example, a plurality of directions may be set in a range of 0 to 360 degrees. For example, one direction is set every 5 degrees, 10 degrees or 15 degrees. After the direction of the external interference source is determined, a second energy distribution sequence T = [ p1, p2, p3, p4 ...] can be obtained through theoretical calculation in a case where the energy of interference generated in each cell by the external interference source decreases (or increase) progressively. The interference energy can be calculated according to a cos angle of an engineering parameter direction angle of the system-side node and a source angle. The arrangement of the energy in the sequence T is the same as the arrangement of the energy in the sequence n.

At step III, the direction corresponding to the second energy distribution feature having the highest matching degree with the first energy distribution feature is used as the direction of the external interference source.

At this step, by calculating the matching of the second energy distribution sequences [ T1, T2, T3, T4...] in all directions with the first energy distribution sequence n, the direction corresponding to the T with the highest matching degree (e.g., largest correlation value) with the sequence n is taken as the direction of the external interference source.

In the above processing, the direction of the external interference source is determined by an interference direction identification algorithm, and the position of the external interference source is then determined in the determined direction by an interference distance geographic algorithm after the direction of the external interference source is determined. In an example, a path loss formula of spatial propagation can be used as the formula of the interference distance geographic algorithm, and the path loss formula is variable according to different propagation models.

According to an exemplary embodiment of the present disclosure, provided is an interference positioning system for a wireless communication system. As shown in FIG. 4, the system may include a type identification module 10 and an interference positioning module 20.

The type identification module 10 is configured to: acquire interference data of a plurality of system-side nodes, and identify, according to the interference data, respective types of interference to the plurality of system-side nodes.

The interference positioning module 20 is configured to: for identified interference of the same type, perform clustering according to positions of system-side nodes subjected to the interferences of the type among the plurality of system-side nodes, and determine, based on the result of clustering, the position of an interference source that generates the interferences of the type.

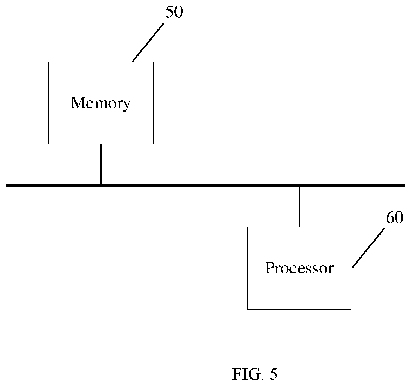

An exemplary embodiment of the present disclosure provides an interference positioning apparatus for a wireless communication system. As shown in FIG. 5, the system may include a memory 50, a processor 60 and computer programs stored on the memory 50 and executable by the processor 60 which, when executed by the processor, cause the processor to carry out the interference positioning method according to any one of the embodiments of the present disclosure.

An exemplary embodiment of the present disclosure provides a computer-readable storage medium having computer programs stored thereon which, when executed by a processor, cause the processor to carry out the interference positioning method according to any one of the embodiments of the present disclosure.

In the embodiments of the present disclosure, the type of interference to a communication network node can be identified by artificial intelligence, the positions (unless otherwise defined, the "position" means geographic position) of nodes subjected to the same type of interference are clustered, and the interference is positioned and analyzed by utilizing the result of clustering and the corresponding positioning algorithm to determine the position of the interference source, for example, determining the direction and distance of the interference source, thereby assisting manual interference detection and treatment and overcoming the difficulty of interference detection in conventional methods. Accordingly, interference identification, classification and positioning become easier.

In the embodiments of the present disclosure, by acquiring interference data of system-side nodes and identifying the type of interference, clustering the system-side nodes subjected to the same type of interference and determining the position of an interference source through an interference positioning algorithm by utilizing the positions (e.g., GIS coordinates) of a group of system-side nodes clustered to the same class center (i.e., having approximate geographic positions), the interference can be quickly detected, and the network performance can be improved.

It should be understood by a person having ordinary skill in the art that all or some of the steps in the methods described above and the functional modules/units in the systems and apparatuses described above can be implemented as software, firmware, hardware and suitable combinations thereof. In the hardware implementation, the division of the functional modules/units mentioned above does not necessarily correspond to the division of physical components. For example, one physical component may have a plurality of functions, or one function or step may be cooperatively executed by a number of physical components. Some or all of the physical components may be implemented as software executed by processors such as central processors, digital signal processors or microprocessors, or implemented as hardware, or implemented as integrated circuits such as application-specific integrated circuits. Such software may be distributed on a computer-readable medium, and the computer-readable medium may include computer storage mediums (or non-temporary mediums) and communication mediums (or temporary mediums). As well-known to a person having ordinary skill in the art, the term computer storage medium includes volatile or non-volatile and removable or non-removable mediums implemented in any method or technology used for storing information (such as computer-readable instructions, data structures, program modules or other data). The computer storage medium may include, but not limited to, RAMs, ROMs, EEPROMs, flash memories and other memory technologies, CD-RMs, digital versatile disks (DVDs) or other optical disk storages, magnetic cassettes, magnetic tapes, magnetic disk storages or other magnetic storage devices, or any other mediums that can be used to store desired information and can be accessed by computers. In addition, as well-known to a person having ordinary skill in the art, the communication medium generally contains computer-readable instructions, data structures, program modules or other data in modulation data signals such as carriers or other transmission mechanisms, and may include any information transfer medium.

## Claims

1. An interference positioning method for a wireless communication system, comprising:
acquiring interference data of a plurality of system-side nodes, and identifying, according to the interference data, respective types of interference to the plurality of system-side nodes; and
for interferences identified of a same type, performing clustering according to positions of system-side nodes subjected to the interferences of the type among the plurality of system-side nodes, and determining, based on a result of the clustering, a position of an interference source that generates the interferences of the type.

2. The interference positioning method of claim 1, wherein:
the system-side nodes comprise access network nodes of the wireless communication system, and the interference data comprises uplink interference data detected by the access network nodes.

3. The interference positioning method of claim 1, wherein the identifying, according to the interference data, respective types of interference to the plurality of system-side nodes comprises:
inputting the interference data of the plurality of system-side nodes into a trained interference model, and determining, according to an output of the interference model, the respective types of interference to the plurality of system-side nodes, wherein the interference model is configured to identify and output the types of interference according to the input interference data.

4. The interference positioning method of claim 3, wherein the interference model is trained in a following way:
acquiring interference data as samples, and marking the types of interference that generates the interference data;
creating the interference model by a machine learning algorithm and training the interference model, the interference data being used as an input of the interference model during training, and the types of interference being used as the output of the interference model;
inputting interference data for testing into the interference model, and identifying the types of interference by the interference model; and
determining whether the accuracy of identification reaches a set threshold; in response to the accuracy of identification reaching the set threshold, determining that the interference model is well trained, and in response to the accuracy of identification not reaching the set threshold, determining that the interference model is not well trained and the training being continuous.

5. The interference positioning method of claim 1, wherein the determining, based on the result of clustering, the position of an interference source that generates the interferences of the type, comprises:
in response to a determination that the type of interference is generated by an internal interference source, performing a following processing on a group of system-side nodes clustered to a same class center:
arbitrarily combining N nodes in the group of system-side nodes, where 3 ≦ N;
for each combination, calculating an interference similarity in case of using a system-side node in the combination as an internal interference source; and
determining, according to positions of N nodes in the combination with the highest interference similarity, the position of an internal interference source that generates the type of interference.

6. The interference positioning method of claim 5, wherein the calculating an interference similarity in case of using a system-side node in this combination as an internal interference source comprises:
acquiring physical positions and feature spatial positions of the group of system-side nodes, a feature spatial positions of a system-side nodes being represented by a position of a feature vector in a time frequency space, the feature vector comprising uplink interference to the system-side node;
calculating a first area geographically enclosed by the group of system-side nodes and a second area enclosed by feature vectors of the group of system-side nodes in a feature map; and
determining, according to the sum of the first area and the second area, an interference similarity in case of using a system-side node in the combination as an internal interference source, wherein the smaller the sum is, the higher the interference similarity is.

7. The interference positioning method of claim 1, wherein the determining, based on a result of the clustering, the position of an interference source that generates the type of interference comprises:
in response to the type of interference being generated by an external interference source, performing a following processing on a group of system-side nodes clustered to a same class center:
determining, according to the acquired interference data of the group of system-side nodes, a first energy distribution feature of interference to the group of system-side nodes;
setting a plurality of directions for the external interference source, and calculating, for each direction, a second energy distribution feature of interference to the group of system-side nodes when the external interference source is located in this direction; and
using the direction corresponding to the second energy distribution feature having the highest matching degree with the first energy distribution feature as the direction of the external interference source, and determining a position of the external internal source in the determined direction by an interference distance geographic algorithm.

8. The interference positioning method of claim 7, wherein the first energy distribution feature and the second energy distribution feature are represented by a sequence of interference energy to the group of system-side nodes, and interference energies in the sequence are arranged in an order from the highest to the lowest or from the lowest to the highest.

9. The interference positioning method of any one of claims 1 to 8, wherein the system-side nodes comprise cells in the wireless communication system.

10. An interference positioning system for a wireless communication system, comprising:
a type identification module, configured to acquire interference data of a plurality of system-side nodes, and identify respective types of interference to the plurality of system-side nodes according to the interference data; and
an interference positioning module, configured to, for identified interferences of a same type, perform clustering according to positions of system-side nodes subjected to the interferences of the type among the plurality of system-side nodes, and determine a position of an interference source that generates the interferences of the type based on a result of the clustering.

11. An interference positioning apparatus for a wireless communication system, comprising a memory, a processor and computer programs that are stored on the memory and executable by the processor which, when executed by the processor, cause the processor to carry out the interference positioning method of any one of claims 1 to 9.

12. A computer-readable storage medium having computer programs stored thereon which, when executed by a processor, cause the processor to carry out the interference positioning method of any one of claims 1 to 9.
